# EUROPEAN PATENT SPECIFICATION

(11) **EP 1 553 269 B1**
(45) Date of publication and mention of the grant of the patent: **31.05.2006**
(21) Application number: 04030780.3
(22) Date of filing: 24.12.2004
(51) Int. Cl.: F01N 3/08, F01N 3/027, F01N 3/023, B01D 53/94

(54) **Apparatus for purifying exhaust gas and method for purifying exhaust gas**
Vorrichtung und Verfahren zur Abgasreinigung
Dispositif et procédée de purification de gaz d'échappement

(30) Priority: 25.12.2003 JP 2003430959
(43) Date of publication of application: 13.07.2005
(73) Proprietor: Toyota Jidosha Kabushiki Kaisha, Toyota-shi, Aichi-ken 471-8571 (JP)
(72) Inventor: Mizuno, Tatsuji, Toyota-shi Aichi-ken, 471-8571 (JP)
(74) Representative: Kuhnen & Wacker

(56) References cited:
- EP-A- 0 758 713
- DE-A1- 10 126 455

## Description

### BACKGROUND OF THE INVENTION

### Field of the Invention

The present invention relates to an apparatus for purifying an exhaust gas, apparatus which is used in internal combustion engines emitting exhaust gases including particulate matters. Moreover, it relates to a method for purifying an exhaust gas, process which uses the apparatus.

### Description of the Related Art

Regarding gasoline engines, harmful components in the exhaust gases have been reduced securely by the strict regulations on the exhaust gases and the technological developments capable of coping with the strict regulations. However, regarding diesel engines, the regulations and the technological developments have been advanced less compared to those of gasoline engines because of the unique circumstances that the harmful components are emitted as particulates (i.e., particulate matters, such as carbonaceous fine particles, sulfuric fine particles like sulfates, and high-molecular-weight hydrocarbon fine particles, hereinafter collectively referred to as "PMs").

As exhaust gas-purifying apparatuses having been developed so far for diesel engines, the following have been known. For example, the exhaust gas-purifying apparatuses can be roughly divided into trapping (or wall-flow) exhaust gas-purifying apparatuses and open (or straight-flow) exhaust gas-purifying apparatuses. Among these, plugged honeycomb structures made from ceramic (i.e., diesel PMs filters, hereinafter referred to as "DPFs") have been known as one of the trapping exhaust gas-purifying apparatuses. In the DPFs, the honeycomb structures are plugged at the opposite openings of cells in a checkered manner alternately, for instance. The DPFs comprise inlet cells plugged on the downstream side of a flow of exhaust gases, outlet cells neighboring the inlet cells and plugged on the upstream side of the flow of the exhaust gases, and cellular walls demarcating the inlet cells and the outlet cells. The DPFs inhibit the emission of PMs by filtering the exhaust gases with the pores of the cellular walls to trap PMs.

In the DPFs, however, the pressure loss increases as PMs deposit thereon. Accordingly, it is needed to regularly remove deposited PMs to recover the DPFs by certain means. Hence, when the pressure loss increases, deposited PMs have been burned with burners or electric heaters conventionally, thereby recovering the DPFs. However, in this case, the greater the deposition of PMs is, the higher the temperature increases in burning deposited PMs. Consequently, there might arise cases that the DPFs are damaged by thermal stress resulting from such burning.

Hence, continuously regenerative DPFs have been developed recently. For example, in one of the continuously regenerative DPFs, a coating layer comprising alumina is formed on the surface of the cellular walls of the DPF, and a catalytic ingredient such as platinum (Pt) is loaded on the coating layer. In accordance with the continuously regenerative DPFs, since the trapped PMs are oxidized and burned by the catalytic reaction of the catalytic ingredient, it is possible to regenerate the DPFs by burning PMs simultaneously with or successively after trapping PMs. Moreover, since the catalytic reaction occurs at relatively low temperatures, and since PMs can be burned when they are trapped less, the continuously regenerative DPFs produce an advantage that the thermal stress affecting the DPFs is so less that the DPFs are inhibited from being damaged.

Japanese Unexamined Patent Publication (KOKAI) No. 9-173,866 discloses such a filter catalyst. In the filter catalyst, a porous coating layer composed of active alumina whose particulate diameters are larger than the average pore diameter of the pores in the cellular walls is formed on the surface of the cellular walls. Moreover, active alumina whose particulate diameters are smaller than the average pore diameter of the pores in the cellular walls is coated within the pores. In addition, a catalytic ingredient is loaded on the porous coating layer as well as on the active alumina coated within the pores. The filter catalyst can lower the pressure loss while increasing the specific surface area of the porous coating layer.

Moreover, Japanese Unexamined Patent Publication (KOKAI) No. 6-159,037 discloses a filter catalyst which comprises the above-described porous coating layer with an NOₓ sorbing material further loaded thereon. With such an arrangement, NOₓ can be sorbed in the NOₓ sorbing material. Consequently, when a reducing agent such as light oil is added into exhaust gases, it is possible to purify the sorbed NOₓ by reduction.

However, in filter catalysts comprising coating layers on which catalytic ingredients and NOₓ sorbing materials are loaded, the forming amount of coating layers is restricted in view of the pressure loss. Accordingly, in order to load catalytic ingredients in a highly dispersed manner so as to inhibit the granular growth of catalytic ingredients at high temperatures, the loading amount of catalytic ingredients should be made less. Consequently, there arises a problem that the resulting filter catalysts lack the performance for purifying PMs and NOₓ. Moreover, when low-temperature exhaust gases keep on flowing into the resulting filter catalysts, there arises another problem that PMs deposit on the cellular walls so much that the flow passages have been clogged to raise the pressure, because the resultant filter catalysts exhibit a low PMs oxidizing activity.

Hence, Japanese Unexamined Patent Publication (KOKAI) No. 2001-212,506, Japanese Unexamined Patent Publication (KOKAI) No. 9-53,442 and Japanese Unexamined Patent Publication (KOKAI) No. 11-5,285 propose exhaust gas-purifying apparatuses comprising straight-flow-structured oxidizing catalysts or NOₓ sorbing-and-reducing catalysts and filter catalysts which are disposed in series. When straight-flow-structured catalysts are thus used combindely, it is possible to upgrade the purifying performance of the resulting exhaust gas-purifying apparatuses without increasing the pressure loss. Moreover, when such a straight-flow-structured catalyst is disposed on a upstream side of a flow of exhaust gases with respect to filter catalysts, the purifying reactions resulting from the upstream-side straight-flow-structured catalyst increases the temperature of exhaust gases. Accordingly, the PMs purifying performance of filter catalysts upgrades. In addition, it is possible to inhibit the rise of pressure loss which results from the clogging.

Incidentally, a system has been put into actual applications in order to improve an NOₓ reducing activity. In such a system, a liquid reducing agent, such as light oil, is supplied into exhaust gases intermittently, thereby improving the NOₓ reducing activity. Moreover, in such a system, it is possible to efficiently remove deposited PMs by oxidation, because the reaction heat resulting from the oxidation of the liquid reducing agent is further added to exhaust gases. Therefore, it has been carried out as well to add a liquid reducing agent to exhaust gases when PMs deposit to a certain extent, thereby forcibly regenerating filter catalysts by removing PMs deposited on filter catalysts by oxidation.

Moreover, Japanese Unexamined Patent Publication (KOKAI) No. 6-173,659 discloses to dispose an NOₓ absorber provided with a heater in an exhaust system of internal combustion engines. When the oxygen concentration of exhaust gases is low, the heater heats the NOₓ adsorber. Accordingly, it is possible to release SOₓ and NOₓ from the NOₓ absorber. Consequently, it is possible to recover the NOₓ absorbing ability of the NOₓ absorber.

In addition, Japanese Unexamined Patent Publication (KOKAI) No. 2002-168,117 discloses an exhaust gas-purifying system which comprises NOₓ sorbing-and-reducing catalysts, and a heater. The NOₓ sorbing-and-reducing catalysts are disposed on an upstream side and a downstream side of a flow of exhaust gases, respectively. The heater heats the upstream-side NOₓ sorbing-and-reducing catalyst. The exhaust gas-purifying system actuates the heater to increase the temperature of the upstream-side NOₓ sorbing-and-reducing catalyst when the temperature of exhaust gases flowing into the upstream-side NOₓ sorbing-and-reducing catalyst is lower than a predetermined value, or when the flow rate of exhaust gases flowing into the upstream-side NOₓ sorbing-and-reducing catalyst is a predetermined value or less. Accordingly, the reactions at the upstream-side NOₓ sorbing-and-reducing catalyst can heighten the H₂/CO concentration ratio of exhaust gases flowing into the downstream-side NOₓ sorbing-and-reducing catalyst. Consequently, the overall NOₓ purifying efficiency upgrades. Moreover, the publication discloses to supply a liquid reducing agent, instead of disposing a heater, in order to heat the upstream-side NOₓ sorbing-and-reducing catalyst using the oxidation heat of the liquid reducing agent.

However, the exhaust gas-purifying system suffers from the following problems. Although the liquid reducing agent is very useful in purifying NOₓ in high-temperature ranges, the liquid reducing agent flows into the upstream-side NOₓ sorbing-and-reducing catalyst in low-temperature ranges. Accordingly, the liquid reducing agent adheres onto the inlet-end surface of the upstream-side NOₓ sorbing-and-reducing catalyst, and then PMs deposit on the adhered liquid reducing agent to clog the cellular passages of the upstream-side NOₓ sorbing-and-reducing catalyst. Consequently, the exhaust pressure loss has gone up. Moreover, when forcibly regenerating the NOₓ sorbing-and-reducing catalysts, it is required to supply the liquid reducing agent comparatively abundantly. As a result, there arises a drawback that the mileage of vehicles has deteriorated.

### SUMMARY OF THE INVENTION

The present invention has been developed in view of the aforementioned circumstances. It is therefore an object of the present invention to inhibit the exhaust pressure loss from going up as well as to inhibit the NOₓ purifying performance from lowering. It is a further object of the present invention to inhibit the mileage of vehicles from deteriorating.

An apparatus according to a first aspect of the present invention for purifying an exhaust gas including particulate matters and flowing in an exhaust system can solve the aforementioned problems, and is characterized by comprising:
a first catalyst;
a second catalyst that is an NOₓ sorbing-and-reducing catalyst and is disposed on a downstream side of the first catalyst;
a heating means for heating the first catalyst;
an injector that injects a liquid reducing agent into the exhaust gas and is disposed on an upstream side of the first catalyst;
a differential pressure sensing means for sensing a difference in pressure between inlet and outlet sides of the fist catalyst, and/or a difference in pressure between inlet and outlet sides of the second catalyst; and
a controlling means for controlling at least the heating means.

In an apparatus according to a second aspect of the present invention, the second catalyst can preferably be a filter catalyst comprising:
a wall-flow-structured honeycomb substrate comprising
   an inlet cell plugged on a downstream side thereof,
   an outlet cell neighboring the inlet cell and plugged on an upstream side thereof, and
   a cellular wall demarcating the inlet cell and the outlet cell and having a pore therein; and
a catalytic layer that is formed on a surface of the cellular wall and an inner face of the pore and comprises
   an oxide support,
   a catalytic ingredient loaded on the oxide support, and
   an NOₓ sorbing material loaded on the oxide support.

In an apparatus according to a third aspect of the present invention, the differential pressure sensing means can preferably comprise:
a first pressure sensing member of sensing a pressure at an upstream side of the first catalyst;
a second pressure sensing member of sensing a pressure between the first catalyst and the second catalyst; and
a third pressure sensing member of sensing a pressure at a downstream side of the second catalyst.

A first method according to the present invention for purifying an exhaust gas is characterized by comprising
a process of using the apparatus according to either one of the first through third aspects of present invention,
wherein the process comprises
a step of controlling the heating means to act in a case of a difference in pressure between the inlet and outlet sides of the first catalyst sensed by the differential pressure sensing means exceeds a predetermined value, and/or
a step of controlling the heating means to act in a case of a difference in pressure between the inlet and outlet sides of the second catalyst sensed by the differential pressure sensing means exceeds a predetermined value.

Moreover, a second method according to the present invention can preferably further comprise
a step of actuating the injector to act in a case of a difference in pressure between the inlet and outlet sides of the second catalyst sensed by the differential pressure sensing means exceeds a predetermined value.

For example, in the present apparatus and method for purifying an exhaust gas, the controlling means actuates the heating means to heat the first catalyst when a pressure difference arises between an inlet pressure of the exhaust gas to the second catalyst and an outlet pressure of the exhaust gas from the second catalyst, i.e., when PMs are detected to clog the second catalyst. Accordingly, the first catalyst facilitates the reaction oxidizing NO in the exhaust gases to NO₂. Then, highly oxidative reactive gases including the resulting NO₂ flow into the second catalyst. Consequently, PMs deposited on the second catalyst are removed by oxidation. Thus, not only it is possible to upgrade the overall NOₓ purifying performance, but also it is possible to inhibit the exhaust pressure loss from going up. Therefore, it is possible to upgrade the mileage of vehicles, because the present apparatus and method can extend the period between the treatments for forcibly regenerating the second catalyst.

Moreover, it is possible to assume how the first catalyst is clogged at the inlet end by detecting a differential pressure between an inlet pressure of the exhaust gas to the first catalyst and an outlet pressure of the exhaust gas from the first catalyst. When the first catalyst is detected so that it is clogged at the inlet end, the controlling means actuates the heating means to heat the first catalyst. As a result, it is possible to remove the liquid reducing agent and PMs adhered onto the inlet-end surface of the first catalyst by combustion.

In addition, it is possible to increase the inlet temperature of the exhaust gas to the second catalyst by actuating the injector and the heating means when forcibly regenerating the second catalyst. Accordingly, the oxidation of PMs is facilitated so that the second catalyst recovers the PMs trapping capability. Moreover, the first catalyst oxidizes the liquid reducing agent partially to modify the liquid reducing agent. Consequently, the liquid reducing agent is turned into highly active HC, and the resulting highly active HC flow into the second catalyst. As a result, the reduction of sulfur-poisoned NOₓ sorbing material is facilitated so that the second catalyst recovers the NOₓ sorbing capability. Therefore, the forcible regeneration of the second catalyst is facilitated so that the period for PMs depositing up to the limit is extended. All in all, the mileage of vehicles upgrades, because it is possible to reduce the addition of the liquid reducing agent.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure.

Fig. 1 is an explanatory diagram for illustrating an arrangement of an exhaust gas-purifying apparatus according to Example No. 1 of the present invention.

Fig. 2 is a flowchart for illustrating how the exhaust gas-purifying apparatus according to Example No. 1 of the present invention is controlled under first circumstances.

Fig. 3 is a flowchart for illustrating how the exhaust gas-purifying apparatus according to Example No. 1 of the present invention is controlled under second circumstances.

Fig. 4 is a flowchart for illustrating how an exhaust gas-purifying apparatus according to Comparative Example No. 1 is controlled under second circumstances.

Fig. 5 is a line chart for illustrating the relationship between times and differential pressures between the inlet and outlet of a downstream-side NOₓ sorbing-and-reducing catalyst (i.e., second catalyst) in the exhaust gas-purifying apparatus according to Example No. 1 of the present invention, and the same in the exhaust gas-purifying apparatus according to Comparative Example No. 1.

Fig. 6 is a bar chart for illustrating the upstream-end surface blockage ratio exhibited by an upstream-side NOₓ sorbing-and-reducing catalyst (i.e., first catalyst) in the exhaust gas-purifying apparatus according to Example No. 1 of the present invention, and the same in an exhaust gas-purifying apparatus according to Comparative Example No. 2.

Fig. 7 is a line chart for illustrating the variation of inlet temperatures of exhaust gases to a downstream-side NOₓ sorbing-and-reducing catalyst (i.e., second catalyst) in the exhaust gas-purifying apparatus according to Example No. 1 of the present invention, and the same in the exhaust gas-purifying apparatus according to Comparative Example No. 2.

Fig. 8 is a line chart for illustrating the distribution curves of the number of carbon atoms included in HC, distribution curves which were exhibited by inlet exhaust gases to the downstream-side NOₓ sorbing-and-reducing catalyst (i.e., second catalyst) in the exhaust gas-purifying apparatus according to Example No. 1 of the present invention as well as in the exhaust gas-purifying apparatus according to Comparative Example No. 2.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

The present exhaust gas-purifying apparatus is used in the exhaust system of internal combustion engines emitting exhaust gases including PMs. As for such internal combustion engines, diesel engines are representative examples. However, some of lean-burn engines emit exhaust gases including PMs. The present exhaust gas-purifying apparatus can be used in such lean-burn engines as well.

As for the first catalyst, straight-flow-structured catalysts are used in general. For example, it is possible to use catalysts which exhibit oxidizing activities, such as oxidizing catalysts, three-way catalysts and NOₓ sorbing-and-reducing catalysts. The first catalyst can especially preferably comprise NOₓ sorbing-and-reducing catalysts. The first catalyst can oxidize at least HC and CO included in exhaust gases. Moreover, when using three-way catalysts and NOₓ sorbing-and-reducing catalysts, even NOₓ can be reduced. Note that NO included in exhaust gases is oxidized to turn into NOₓ, such as NO₂, and the resulting reactive gases exhibit extremely high oxidizing activities. Therefore, when the highly oxidative reactive gases flow into the second catalyst, the PMs oxidizing activity of the second catalyst upgrades remarkably.

The first catalyst can be provided with the heating means for heating the first catalyst. The heating means can be those which the controlling means can control their operations. As for the heating means, it is preferable to use electric heaters. Specifically, the heating means can be buried in the first catalyst, or can be disposed in casings for accommodating the first catalyst. Moreover, the heating means can heat the first catalyst indirectly by heating inlet exhaust gases to the first catalyst. If such is the case, it is possible to further dispose a second heating means or an oxidizing catalyst on a more upstream side of the flow of the exhaust gases with respect to the first catalyst.

The second catalyst is an NOₓ sorbing-and-reducing catalyst. The second catalyst can be straight-flow-structured catalysts. However, the second catalyst can preferably be filter catalysts formed as wall-flow structures. Specifically, such a filter catalyst can preferably comprise:
a wall-flow-structured honeycomb substrate comprising
   an inlet cell plugged on a downstream side thereof,
   an outlet cell neighboring the inlet cell and plugged on an upstream side thereof, and
   a cellular wall demarcating the inlet cell and the outlet cell and having a pore therein; and
a catalytic layer that is formed on a surface of the cellular wall and an inner face of the pore and comprises
   an oxide support,
   a catalytic ingredient loaded on the oxide support, and
   an NOₓ sorbing material loaded on the oxide support.

The injector disposed on an upstream side of the flow of the exhaust gases with respect to the first catalyst supplies a liquid reducing agent into exhaust gases. As for the injector, it is possible to use those used conventionally.

The differential pressure sensing means is for sensing a difference in pressure between inlet and outlet sides of the fist catalyst, and/or a difference in pressure between inlet and outlet sides of the second catalyst. For example, the differential pressure sensing means senses a differential pressure between an inlet pressure of the exhaust gases to the second catalyst and an outlet pressure of the exhaust gases from the second catalyst at least. As for the differential pressure sensing means, it is possible to use pressure sensors. Moreover, the differential pressure sensing means can desirably further sense a differential pressure between an inlet pressure of the exhaust gases to the first catalyst and an outlet pressure of the exhaust gases from the first catalyst. Note that the outlet pressure of the exhaust gases from the first catalyst is equal to the inlet pressure of the exhaust gases to the second catalyst. Therefore, it is satisfactory to dispose three differential pressure sensing means at most, for instance, first differential pressure detecting sensing means on an upstream side of the flow of the exhaust gases with respect to the first catalyst, second differential pressure sensing means between the first catalyst and the second catalyst, and third differential pressure sensing means on a downstream side of the flow of the exhaust gases with respect to the second catalyst.

The controlling means controls the heating means in accordance with detection signals output by the differential pressure sensing means, and actuates the heating means when the differential pressure exceeds a predetermined value. The controlling means can be those which use the function of engine control units (hereinafter abbreviated to as "ECU"), or can be digital circuits, such as computers, which are disposed independently of ECU. It is satisfactory that the controlling means controls the heating means in accordance with detection signals output by the differential pressure sensing means. However, the controlling means can further control the operations of the injector.

For example, in the present first exhaust gas-purifying method, the controlling means actuates the heating means to heat the first catalyst when a pressure difference arises between an inlet pressure of the exhaust gases to the second catalyst and an outlet pressure of the exhaust gases from the second catalyst. Accordingly, the first catalyst is heated. Consequently, not only the inlet temperature of the exhaust gases to the second catalyst increases, but also the first catalyst oxidizes NO to generate NOₓ such as NO₂. The exhaust gases including the resultant NOₓ are reactive gases which exhibit high oxidative activities. As a result, it is possible to remove PMs deposited on the second catalyst by oxidation as well as to regenerate the second catalyst to a certain extent. Therefore, the present first exhaust gas-purifying process can extend the period for PMs depositing up to the limit so that the period between the treatments for forcibly regenerating the second catalyst can be extended. Thus, it is possible to reduce the addition of the liquid reducing agent used for forcibly regenerating the second catalyst. All in all, it is possible to upgrade the mileage of vehicles.

When the first catalyst is heated in fuel-lean atmospheres, for instance, NO in exhaust gases is oxidized to NO₂ as set forth in equation (1) below. Moreover, when the first catalyst comprises an NOₓ sorbing-and-reducing catalyst, the heated first catalyst releases NOₓ sorbed in the NOₓ sorbing material

N + O₂ ---> NO₂ + O* (1)

The resulting NO₂ and released NOₓ are sorbed in the NOₓ sorbing material of the second catalyst, for instance, as set forth equation (2) below.

2NO₂ + O₂ + BaO ---> Ba (NO₃)₂ + O* (2)

The O* atoms (i.e., active oxygen) generating as set forth in equations (1) and (2) can oxidize PMs at low temperatures, because they are highly reactive. Thus, the O* atoms can purify PMs deposited on the second catalyst by oxidation even in low-temperature ranges.

On the other hand, in fuel-rich atmospheres into which a liquid reducing agent, such as light oil, is added, the following reactions as set forth in equation (3) below occur at the second catalyst at least. Moreover, when the first catalyst comprises an NOₓ sorbing-and-reducing catalyst, the reactions recited in equation (3) below occur at the first catalyst as well.

Ba (NO₃) 2 ---> 2NO₂ + BaO + O* ---> N₂ + 2O₂ + BaO + O* (3)

The O* atoms generating as set forth in equation (3) can also purify PMs by oxidation even in low-temperature fuel-rich atmospheres, because they are likewise highly reactive.

When carrying out the above-described control, the heating means can desirably be actuated so as to let the temperature of the exhaust gases flowing through the second catalyst fall in a range of from 250 to 700 °C, further desirably from 300 to 700 °C, furthermore desirably from 350 to 650 °C. When the temperature of the exhaust gases flowing through the second catalyst is lower than 250 °C, the aforementioned operations are less likely to be effected. When the temperature of the exhaust gases flowing through the second catalyst is higher than 700 °C, the above-described advantages saturate to result in energy loss.

Moreover, in the present first exhaust gas-purifying method, it is preferable to further actuate the heating means when the differential pressure between an inlet pressure of the exhaust gases to the first catalyst and an outlet pressure of the exhaust gases from the first catalyst is greater than a predetermined value, in addition to the above-described control. If such is the case, even when the liquid reducing agent adheres onto the inlet-end surface of the first catalyst and PMs further adhere onto the adhered liquid reducing agent, it is possible to vaporize the liquid reducing agent by heating the first catalyst. Thus, it is possible to solve the problems resulting from the clogged inlet-end surface of the first catalyst.

In this instance, the heating means can desirably be actuated so as to let the temperature of the exhaust gases flowing through the first catalyst fall in a range of from 250 to 350 °C, further desirably from 275 to 325 °C, furthermore desirably from 300 to 310 °C. When the temperature of the exhaust gases flowing through the first catalyst is lower than 250 °C, the aforementioned operations are less likely to be effected. When the temperature of the exhaust gases flowing through the first catalyst is higher than 350 °C, the above-described advantages saturate to result in energy loss.

In addition, in the present second exhaust gas-purifying method, it is preferable to actuate the injector and the heating means when the differential pressure between an inlet pressure of the exhaust gases to the second catalyst and an outlet pressure of the exhaust gases from the second catalyst is greater than a predetermined value. Accordingly, PMs deposited on the second catalyst is removed by oxidation f acilitatively. Consequently, the second catalyst recovers the PMs trapping capability. Note that the first catalyst oxidizes the liquid reducing agent partially, and the resulting modified highly active HC flow into the second catalyst. Therefore, even when the NOₓ sorbing material of the second catalyst is sulfur poisoned, the second catalyst can release the deposited sulfur as SO₂ by reduction reactions, and thereby regenerating the NOₓ sorbing capability of the NOₓ sorbing material.

If such is the case, the heating means can desirably be actuated so as to let the temperature of the exhaust gases flowing through the second catalyst fall in a range of from 600 to 700 °C, further desirably from 630 to 680 °C, furthermore desirably from 650 to 670 °C. When the temperature of the exhaust gases flowing through the second catalyst is lower than 600 °C, PMs are likely to reside in the second catalyst. When the temperature of the exhaust gases flowing through the second catalyst is higher than 700 °C, not only the above-described advantages saturate to result in energy loss but also heat shocks might damage the second catalyst.

### EXAMPLES

Hereinafter, the present invention will be described in detail with reference to examples and comparative examples.

### (Example No. 1)

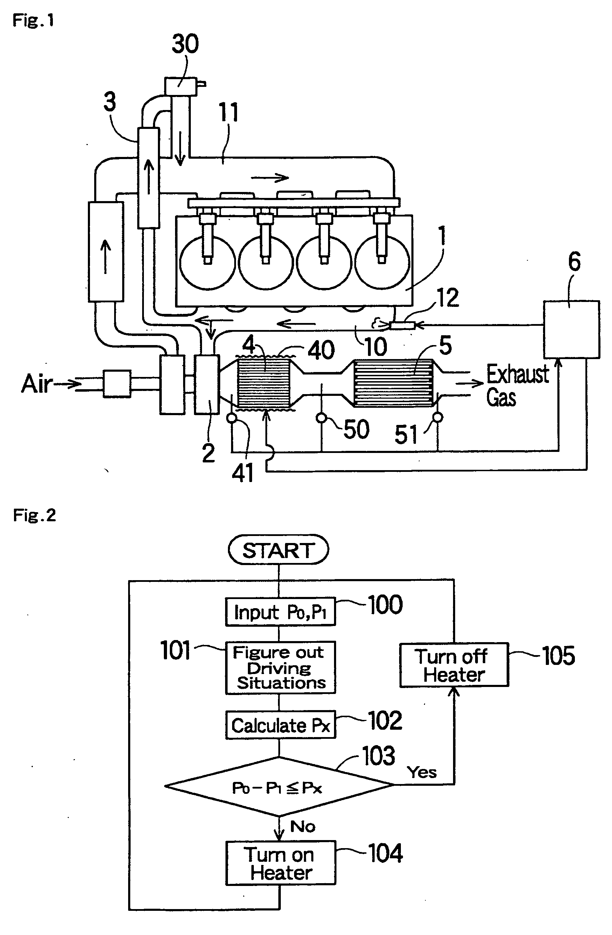

Fig. 1 illustrates an exhaust gas-purifying apparatus according to Example No. 1 of the present invention. An exhaust system of a direct-injection diesel engine 1 is branched into two flow passages from an exhaust manifold 10. A turbocharger 2 is disposed in one of the flow passages, and an exhaust gas recirculation (hereinafter abbreviated to as "EGR") cooler 3 is disposed in the other one of the flow passages. The exhaust gases emitted from the turbocharger 2 pass through a catalytic converter, and are discharged to the outside. On the other hand, the exhaust gases passing through the EGR cooler 3 are returned to an intake manifold 11 while the flow rate is controlled by an EGR valve 30. An injector 12 is installed on an upstream side of the flow of the exhaust gases with respect to the turbocharger 2 so that it can add light oil into the exhaust gases. A straight-flow-structured NOₓ sorbing-and-reducing catalyst 4 is disposed on a downstream side of the flow of the exhaust gases with respect to the turbocharger 2. Moreover, a wall-flow-structured NOₓ sorbing-and-reducing catalyst 5 is disposed on a downstream side of the flow of the exhaust gases with respect to the straight-flow-structured NOₓ sorbing-and-reducing catalyst 4. Note that the straight-flow-structured NOₓ sorbing-and-reducing catalyst 4 is provided with an electric heater 40.

A first pressure sensor 41 is disposed on an upstream side of the flow of the exhaust gases with respect to the straight-flow-structured NOₓ sorbing-and-reducing catalyst 4 to detect a pressure of the inlet exhaust gases to the straight-flow-structured NOₓ sorbing-and-reducing catalyst 4. Moreover, a second pressure sensor 50 is disposed on an upstream side of the flow of the exhaust gases with respect to the wall-flow-structured NOₓ sorbing-and-reducing catalyst 5. In addition, a third pressure sensor 51 is disposed on a downstream side of the flow of the exhaust gases with respect to the wall-flow-structured NOₓ sorbing-and-reducing catalyst 5. The second pressure sensor 50 detects a pressure of the inlet exhaust gases to the wall-flow-structured NOₓ sorbing-and-reducing catalyst 5. The third pressure sensor 51 detects a pressure of the outlet exhaust gases from the wall-flow-structured NOₓ sorbing-and-reducing catalyst 5. The detection signals detected by the pressure sensors 41, 50, 51 are input into a controller 6. Thus, the controller 6 controls to turn on and off the electric heater 40 in accordance with the detection signals emitted from the pressure sensors 41, 50, 51. Moreover, the controller 6 controls the injector 12 as well.

The straight-flow-structured NOₓ sorbing-and-reducing catalyst 4 comprises a straight-flow-structured honeycomb-shaped substrate made of cordierite, an Al₂O₃ coating layer, and Pt, Rh, Ba, K and Li. The honeycomb-shaped substrate has a volume of 1 L, and comprises cells in an amount of 600 cells/inch², cellular walls and cellular passages. The Al₂O₃ coating layer is formed on a surface of the cellular passages of the honeycomb-shaped substrate. The Pt, Rh, Ba, K and Li are loaded on the Al₂O₃ coating layer. Note that the coating layer is formed in an amount of 250 g with respect to 1 L of the honeycomb-shaped substrate. Moreover, the Pt, Rh, Ba, K and Li are loaded in an amount of 5 g, 0.5 g, 0.1 mol, 0.1 mol and 0.2 mol, respectively, with respect to 1 L of the honeycomb-shaped substrate.

Moreover, the wall-flow-structured NOₓ sorbing-and-reducing catalyst 5 comprises a wall-flow-structured honeycomb-shaped substrate made of cordierite, an Al₂O₃ coating layer, and Pt, Rh, Ba, K and Li. The honeycomb-shaped substrate has a volume of 2 L, and comprises inlet cells, outlet cells and porous cellular walls. The inlet cells are plugged on a downstream side of the flow of the exhaust gases. The outlet cells neighbor the inlet cells, and are plugged on an upstream side of the flow of the exhaust gases. The porous cellular walls demarcate the inlet cells and the outlet cells, and have a large number of pores whose average pore diameter is 20 µm. The Al₂O₃ coating layer is formed on a surface of the cellular walls of the honeycomb-shaped substrate as well as on a surface of the pores of the cellular walls. The Pt, Ba, K and Li are loaded on the Al₂O₃ coating layer. Note that the Al₂O₃ coating layer is formed in an amount of 150 g with respect to 1 L of the honeycomb-shaped substrate. Moreover, the Pt, Rh, Ba, K and Li are loaded in an amount of 5 g, 0.5 g, 0.1 mol, 0.1 mol and 0.2 mol, respectively, with respect to 1 L of the honeycomb-shaped substrate.

An engine testing bench was prepared which was equipped with a direct-injection diesel engine whose displacement was 2 L. The exhaust gas-purifying apparatus according to Example No. 1 was disposed in the exhaust system of the diesel engine. Then, the diesel engine was driven in a pattern simulating the Japanese "11 Lap" mode for 50 hours (i.e. , the average vehicle speed was 46 km/h, and the travelling distance was about 2,000 km). Note that the diesel engine was driven alternately in fuel-lean atmospheres for 8 seconds while supplying air-fuel mixtures whose A/F fluctuated in a range of from 18 to 30, and in fuel-rich atmospheres for 2 seconds while carrying out rich spiking in which light oil was injected into the exhaust gases at a flow rate of 0.1 c.c./sec. During the examination, the average mileage of the diesel engine and the PMs deposition on the straight-flow-structured NOₓ sorbing-and-reducing catalyst 4 and wall-flow-structured NOₓ sorbing-and-reducing catalyst 5 were measured. Table 1 below sets forth the results.

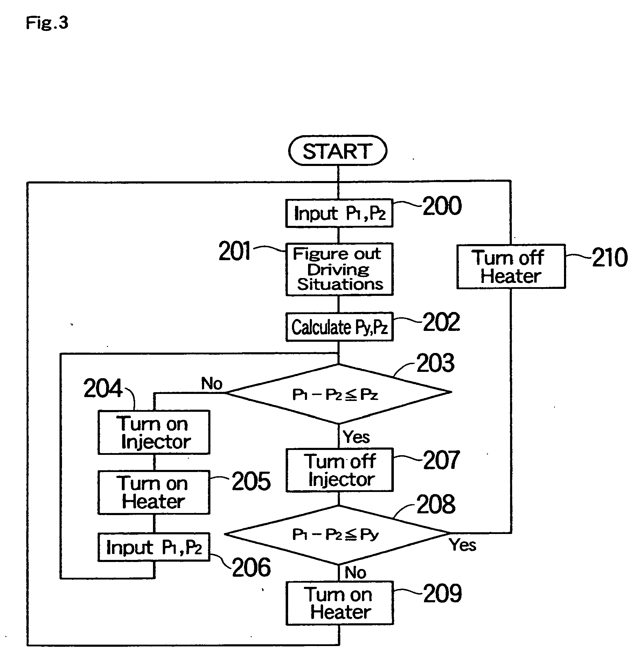

How the controller 6 controlled the electric heater 40 during the above-describe examination will be hereinafter described with reference to the flowcharts illustrated in Figs. 2 and 3. Note that the controller 6 controlled the electric heater 40 in parallel with the driving of the diesel engine under the aforementioned lean-rich conditions.

Firstly, at step 100, detection signals emitted from the first and second pressure sensors 41, 50 were input into the controller 6 to determine a pressure P₀ of the inlet exhaust gases to the straight-flow-structured NOₓ sorbing-and-reducing catalyst 4 and a pressure P₁ of the outlet exhaust gases from the straight-flow-structured NOₓ sorbing-and-reducing catalyst 4. At step 101, the controller 6 figured out the current driving situations of the diesel engine. At step 102, the controller 6 calculated a target differential pressure Pₓ based on a map stored therein in advance.

At step 103, the controller 6 compared the actual differential pressure (P₀ - P₁) with the target differential Pₓ. When P₀- P₁ ≦Pₓ, the controller 6 regarded at step 105 that the electric power supply to the heater 40 was turned off. Thereafter, the controller 6 returned the processing back to step 100. On the other hand, when P₀ - P₁ > Pₓ, the controller 6 turned on the electric power supply to the heater 40 at step 104 so that the straight-flow-structured NOₓ sorbing-and-reducing catalyst 4 is heated to 250°C. Accordingly, the light oil adhered on the inlet-end surface of the straight-flow-structured NOₓ sorbing-and-reducing catalyst 4 was vaporized, and simultaneously PMs deposited thereon were oxidized facilitatively. Thereafter, the controller 6 returned the processing back to step 100. Consequently, the controller 6 controlled the electric heater 40 so as to keep on heating the straight-flow-structured NOₓ sorbing-and-reducing catalyst 4 until the actual differential pressure (P₀ - P₁) become the target differential Pₓ or less (i.e., P₀ - P₁ ≦ Pₓ) .

Moreover, the processing illustrated Fig. 3 was carried out in parallel with the above-described processing. In the parallel processing, at step 200, detection signals emitted from the second and third pressure sensors 50, 51 were first input into the controller 6 to determine a pressure P₁ of the inlet exhaust gases to the wall-flow-structured NOₓ sorbing-and-reducing catalyst 5 and a pressure P₂ of the outlet exhaust gases from the wall-flow-structured NOₓ sorbing-and-reducing catalyst 5. At step 201, the controller 6 figured out the current driving situations of the diesel engine. At step 202, the controller 6 calculated a first target differential pressure P_{y} and a second target differential pressure P_{z} based on a map stored therein in advance. Note that the second target differential pressure P_{z} is a differential pressure at which the wall-flow structure NOₓ sorbing-and-reducing catalyst 5 should be forcibly regenerated. Moreover, the first target differential pressure P_{y} is smaller than the second target differential pressure P_{z} (i.e., P_{y} < P_{z}).

At step 203, the controller 6 compared the actual differential pressure (P₁ - P₂) with the second target differential P_{z} calculated from the current driving situations of the diesel engine. When P₁ - P₂ > P_{z}, the controller 6 judged that the wall-flow-structured NOₓ sorbing-and-reducing catalyst 5 was clogged. Then, the controller 6 continued the processing so that the wall-flow-structured NOₓ sorbing-and-reducing catalyst 5 was forcibly regenerated starting at step 204.

When the wall-flow-structured NOₓ sorbing-and-reducing catalyst 5 was forcibly regenerated at step 204, the injector 12 added light oil into the exhaust gases at an addition rate of 0.1 c.c./sec. Virtually simultaneously therewith, at step 205, the controller 6 turned on the electric power supply to the heater 40 so that the straight-flow-structured NOₓ sorbing-and-reducing catalyst 4 was heated to 250 °C. Accordingly, not only the temperature of the inlet exhaust gases flowing into the wall-flow-structured NOₓ sorbing-and-reducing catalyst 5 increased, but also the straight-flow-structured NOₓ sorbing-and-reducing catalyst 4 facilitated the modification reaction of the light oil. Thus, not only the light oil was gasified, but also modified active HC flowed into the wall-flow-structured NOₓ sorbing-and-reducing catalyst 5. Therefore, the wall-flow-structured NOₓ sorbing-and-reducing catalyst 5 removed trapped PMs by oxidation efficiently. Then, at step 206, a pressure P₁ of the inlet exhaust gases to the wall-flow-structured NOₓ sorbing-and-reducing catalyst 5 and a pressure P₂ of the outlet exhaust gases from the wall-flow-structured NOₓ sorbing-and-reducing catalyst 5 were re-input into the controller 6. Thereafter, the controller 6 returned the processing back to step 203. Consequently, the controller 6 repeated the processes designated at steps 204 through 206 until the second target differential pressure P_{z} become less than the actual differential pressure (P₁ - P₂), that is, P_{z} < P₁ - P₂.

At step 203, when the actual differential pressure (P₁ - P₂) was the second target differential pressure P_{z} or less, the controller 6 turned off the injector 12 to stop adding the light oil at step 207. At step 208, the controller 6 compared the actual differential pressure (P₁ - P₂) with the first target differential pressure P_{y}. At step 208, when (P₁ - P₂) ≦ P_{y}, the controller 6 turned off the electric power supply to the heater 40 at step 210. Thereafter, the controller 6 returned the processing back to step 200.

On the contrary, at step 208, when (P₁ - P₂) > P_{y}, the controller 6 turned on the electric power supply to the heater 40 at step 209 so that the straight-flow-structured NOₓ sorbing-and-reducing catalyst 4 was heated to 350 °C. Accordingly, not only the straight-flow-structured NOₓ sorbing-and-reducing catalyst 4 exhibited an enhanced NO oxidizing activity, but also released NOₓ stored therein. Consequently, PMs stored in the wall-flow-structured NOₓ sorbing-and-reducing catalyst 5 were oxidized, because highly reactive exhaust gases including NOₓ flowed into the wall-flow-structured NOₓ sorbing-and-reducing catalyst 5. Thereafter, the controller 6'returned the processing back to step 200. Thus, the controller 6 controlled the electric heater 40 so as to keep on heating the straight-flow-structured NOₓ sorbing-and-reducing catalyst 4 until the actual differential pressure (P₁ - P₂) become the first target differential P_{y} or less (i.e., P₁ - P₂ ≦ P_{y}) .

### (Comparative Example No. 1)

Except that the first pressure sensor 41 is not disposed on an upstream side of the flow of the exhaust gases with respect to the straight-flow-structured NOₓ sorbing-and-reducing catalyst 4; and the straight-flow-structured NOₓ sorbing-and-reducing catalyst 4 is not provided with the electric heater 40, Comparative Example No. 1 uses the same exhaust gas-purifying apparatus as that of Example No. 1.

The exhaust gas-purifying apparatus according to Comparative Example No. 1 was examined for the average mileage of the diesel engine and the PMs deposition on the straight-flow-structured NOₓ sorbing-and-reducing catalyst 4 and wall-flow-structured NOₓ sorbing-and-reducing catalyst 5 in the same manner as the exhaust gas-purifying apparatus according to Example No. 1 was examined. Table 1 below sets forth the results.

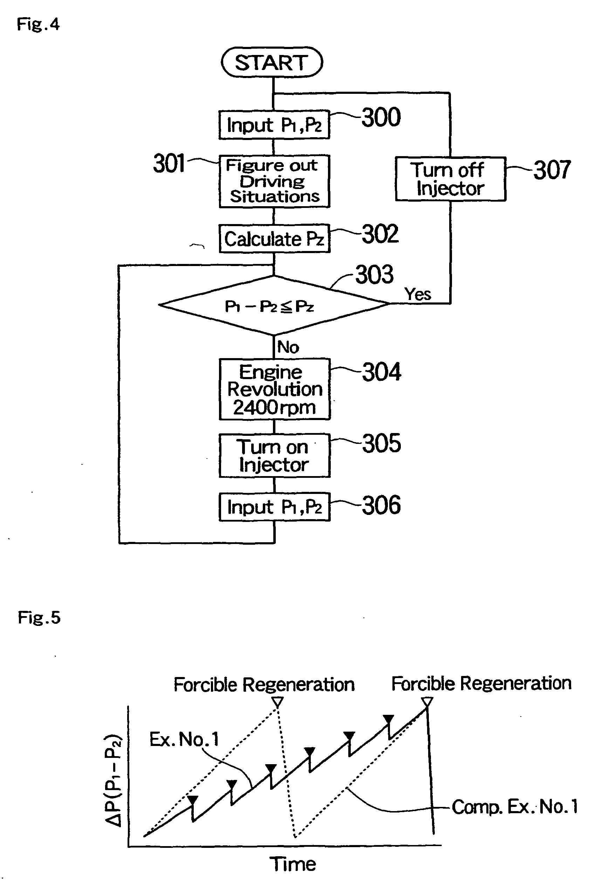

In Comparative Example No. 1, how the controller 6 controlled the electric heater 40 during the above-describe examination will be hereinafter described with reference to the flowchart illustrated in Fig. 4.

Firstly, at step 300, detection signals emitted from the second and third pressure sensors 50, 51 were input into the controller 6 to determine a pressure P₁ of the inlet exhaust gases to the wall-flow-structured NOₓ sorbing-and-reducing catalyst 5 and a pressure P₂ of the outlet exhaust gases from the wall-flow-structured NOₓ sorbing-and-reducing catalyst 5. At step 301, the controller 6 figured out the current driving situations of the diesel engine. At step 302, the controller 6 calculated a target differential pressure P_{z} based on a map stored therein in advance. At step 303, the controller 6 compared the actual pressure difference (P₁ - P₂) with the target differential pressure P_{z}.

When P₁ - P₂ > P_{z}, the controller 6 judged that the wall-flow-structured NOₓ sorbing-and-reducing catalyst 5 was clogged. Then, the controller 6 controlled the revolution speed of the diesel engine to 2, 400 rpm at step 304 so that the temperature of the inlet exhaust gases to the wall-flow-structured NOₓ sorbing-and-reducing catalyst 5 was adjusted to about 350 °C. Simultaneously therewith, at step 305, the injector 12 added light oil into the exhaust gases at an addition rate of 0.1 c. c. /sec. Then, at step 306, a pressure P₁ of the inlet exhaust gases to the wall-flow-structured NOₓ sorbing-and-reducing catalyst 5 and a pressure P₂ of the outlet exhaust gases from the wall-flow-structured NOₓ sorbing-and-reducing catalyst 5 were re-input into the controller 6. Thereafter, the controller 6 returned the processing back to step 303. Consequently, the controller 6 held the engine revolution of the diesel engine to 2, 400 rpm, and kept the injector 12 to add the light oil until the actual differential pressure (P₁ - P₂) become the target differential pressure P_{z} or less, that is, P₁ - P₂ ≦ P_{z}.

On the contrarily, when P₁ - P₂ ≦ P_{z} at step 303, the controller 6 regarded at step 307 that the injector 12 was not actuated and the engine revolution of the diesel engine was those under ordinary driving circumstances. Hence, the controller 6 returned the processing back to step 300.

### (Comparative Example No. 2)

Except that the controller 6 does not carry out any control, Comparative Example No. 2 has the same arrangements as those of the exhaust gas-purifying apparatus according to Example No. 1.

The exhaust gas-purifying apparatus according to Comparative Example No. 2 was examined for the average mileage of the diesel engine and the PMs deposition on the straight-flow-structured NOₓ sorbing-and-reducing catalyst 4 and wall-flow-structured NOₓ sorbing-and-reducing catalyst 5 in the same manner as the exhaust gas-purifying apparatus according to Example No. 1 was examined. Table 1 below sets forth the results.

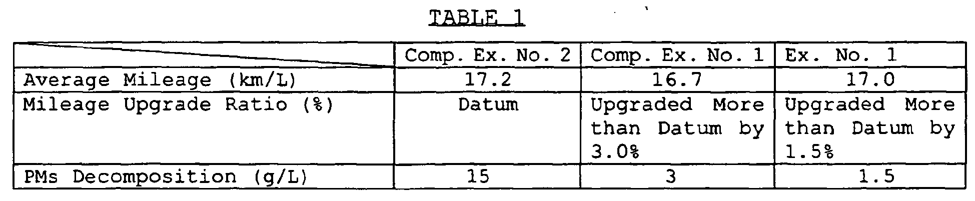

### (Evaluation)

Fig. 5 illustrates the relationships between times and actual differential pressures ΔP (P₁ - P₂) which were exhibited by the exhaust gas-purifying apparatuses according to Example No. 1 and Comparative Example No. 1 being controlled in the above-described manners. In the exhaust gas-purifying apparatus according to Example No. 1, the time required for raising the actual differential pressure (P₁ - P₂) to the predetermined differential pressure P_{z} was extended to as much as about twice as that in the exhaust gas-purifying apparatus according to Comparative Example No. 2, because the electric heater 40 was turned on and off frequently.

From Table 1 above, it is apparent that the exhaust gas-purifying apparatus according to Example No. 1 exhibited a PMs deposition less than those exhibited by the exhaust gas-purifying apparatuses according to Comparative Example Nos. 1 and 2, and that the mileage shown by the exhaust gas-purifying apparatus according to Example No. 1 was better than that shown by the exhaust gas-purifying apparatus according to Comparative Example No. 2. Thus, when the electric heater 40 is controlled appropriately in accordance with the detection signals output by the pressure sensors 41, 50 and 51 as described in Example No. 1, it is possible to extend the period between the treatments for forcibly regenerating the wall-flow-structured NOₓ sorbing-and-reducing catalyst 5 and accordingly to reduce the addition of the light oil. As a result, the mileage of the diesel engine equipped with the exhaust gas-purifying apparatus according to Example No. 1 was upgraded. Moreover, it is evident that the exhaust gas-purifying apparatus according to Example No. 1 purified deposited PMs by oxidation more efficiently than the exhaust gas-purifying apparatuses according to Comparative Example Nos. 1 and 2 did.

### (Experimental Example No. 1)

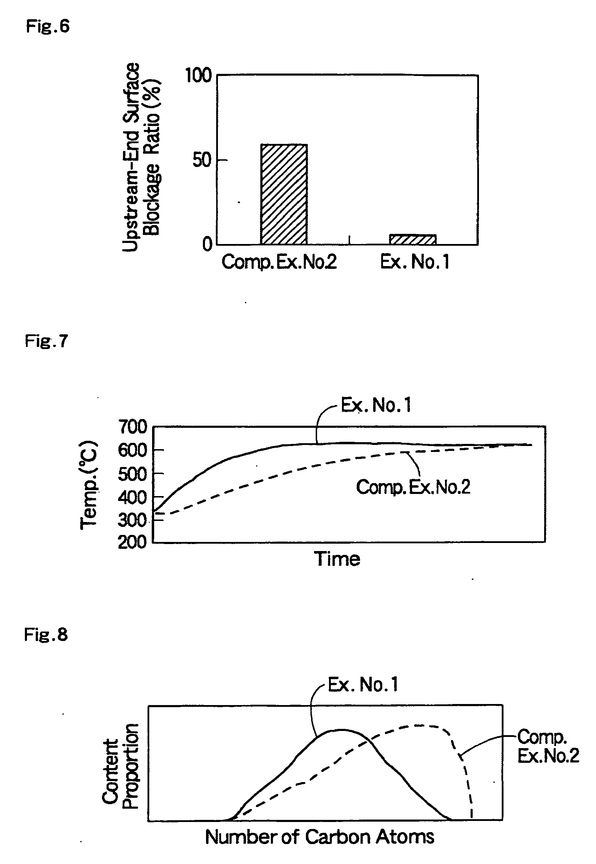

The exhaust gas-purifying apparatuses according to Example No. 1 and Comparative Example No. 2 were operated for 2 hours while adding light oil through the injector 12 under the following conditions:
the above-described diesel engine was driven at a revolving speed of 1, 600 rpm with a torque of 30 Nm on an engine testing bench; and
the temperature of the inlet exhaust gases to the straight-flow-structured NOₓ sorbing-and-reducing catalyst 4 was set at 200 °C.
When operating the exhaust gas-purifying apparatus according to Example No. 1, the control was carried out in the same manner as described in Example No. 1. Thereafter, the straight-flow-structured NOₓ sorbing-and-reducing catalyst 4 was removed to observe the inlet-end surface. Then, the end-surface blockage ratio of the straight-flow-structured NOₓ sorbing-and-reducing catalyst 4 was calculated by an image analysis. Fig. 6 illustrates the result.

From Fig. 6, it is appreciated that, in the exhaust gas-purifying apparatus according to Example No. 1, the inlet-end surface of the straight-flow-structured NOₓ sorbing-and-reducing catalyst 4 was remarkably inhibited from being closed. That is, when the electric heater 40 is controlled appropriately in accordance with the detection signals output by the first and second pressure sensors 41 and 50 as described in Example No. 1, it is apparent that it is possible to prevent not only the light oil but also PMs from depositing on the inlet-end surface of the straight-flow-structured NOₓ sorbing-and-reducing catalyst 4.

### (Experimental Example No. 2)

The exhaust gas-purifying apparatuses according to Example No. 1 and Comparative Example No. 2 were operated for 2 hours while adding light oil through the injector 12 under the following conditions:
the above-described diesel engine was driven at a revolving speed of 2, 900 rpm with a torque of 80 Nm on an engine testing bench; and
the temperature of the inlet exhaust gases to the wall-flow-structured NOₓ sorbing-and-reducing catalyst 5 was set at 350 °C.
When operating the exhaust gas-purifying apparatus according to Example No. 1, the control was carried out in the same manner as described in Example No. 1. During the operation, the inlet exhaust gases to the wall-flow-structured NOₓ sorbing-and-reducing catalyst 5 were examined for the temperature variation and HC composition.
Fig. 7 illustrates the resulting temperature variation. Fig. 8 illustrates the resultant HC composition.

From Fig. 7, it is seen that the temperature of the inlet exhaust gases to the wall-flow-structured NOₓ sorbing-and-reducing catalyst 5 was higher in the exhaust gas-purifying apparatus according to Example No. 1 than that in the exhaust gas-purifying apparatus according to Comparative Example No. 2. Thus, it is evident that the electric heater 40 actuated as described above increased the temperature of the inlet exhaust gases to the wall-flow-structured NOₓ sorbing-and-reducing catalyst 5. Moreover, it is possible to notice from Fig. 8 that, in the exhaust gas-purifying apparatus according to Example No. 1, HC in the inlet exhaust gases to the wall-flow-structured NOₓ sorbing-and-reducing catalyst 5 exhibited lower molecular weights than those in the exhaust gas-purifying apparatus according to Comparative Example No. 2. This fact implies that the light oil was oxidized partially, and was modified eventually.

## Claims

1. An apparatus for purifying an exhaust gas including particulate matters and flowing in an exhaust system, **characterized by** comprising:
a first catalyst (4)
a second catalyst (5) that is an NOₓ sorbing-and-reducing catalyst and is disposed on a downstream side of the first catalyst (4) ;
a heating means (40) for heating the first catalyst (4) ;
an injector (12) that injects a liquid reducing agent into the exhaust gas and is disposed on an upstream side of the first catalyst (4) ;
a differential pressure sensing means (41,50,51) for sensing a difference in pressure between inlet and outlet sides of the fist catalyst (4), and/or a difference in pressure between inlet and outlet sides of the second catalyst (5) ; and
a controlling means (6) for controlling at least the heating means (40).

2. An apparatus according to claim 1, wherein the second catalyst (5) is a filter catalyst comprising:
a wall-flow-structured honeycomb substrate comprising
an inlet cell plugged on a downstream side thereof,
an outlet cell neighboring the inlet cell and plugged on an upstream side thereof, and
a cellular wall demarcating the inlet cell and the outlet cell and having a pore therein; and
a catalytic layer that is formed on a surface of the cellular wall and an inner face of the pore and comprises
an oxide support,
a catalytic ingredient loaded on the oxide support, and
an NOₓ sorbing material loaded on the oxide support.

3. An apparatus according to claim 1 or 2, wherein the first catalyst (4) comprises:
a straight-flow-structured honeycomb substrate comprising
a cell through which the exhaust gas flows from an upstream side to a downstream side, and
a cellular wall demarcating the cell; and
a catalytic layer comprising
an oxide support, and
a catalytic ingredient loaded on the oxide support.

4. An apparatus according to claim 3, wherein the catalytic layer of the first catalyst (4) further comprises an NOₓ sorbing material loaded on the oxide support.

5. An apparatus according to either one of claims 1 through 4, wherein the first (4) catalyst is provided with the heating means (40).

6. An apparatus according to either one of claims 1 through 5, wherein the differential pressure sensing means comprises:
a first pressure sensing member (41) of sensing a pressure at an upstream side of the first catalyst (4);
a second pressure sensing member (50) of sensing a pressure between the first catalyst (4) and the second catalyst (5); and
a third pressure sensing member (51) of sensing a pressure at a downstream side of the second catalyst (5).

7. A method for purifying an exhaust gas, **characterized by** comprising
a process of using the apparatus according to either one of claims 1 through 6,
wherein the process comprises
a step of controlling the heating means to act in a case of a difference in pressure between the inlet and outlet sides of the first catalyst sensed by the differential pressure sensing means exceeds a predetermined value, and/or
a step of controlling the heating means to act in a case of a difference in pressure between the inlet and outlet sides of the second catalyst sensed by the differential pressure sensing means exceeds a predetermined value.

8. A method for purifying an exhaust gas according to claim 7, wherein the process further comprises
a step of actuating the injector to act in a case of a difference in pressure between the inlet and outlet sides of the second catalyst sensed by the differential pressure sensing means exceeds a predetermined value.

9. A method for purifying an exhaust gas according to claim 7 or 8, wherein the heating means is controlled to heat the exhaust gas so as to stream the exhaust gas in a temperature ranging from 250 to 350 °C through the first catalyst.

10. A method for purifying an exhaust gas according to claim 7 or 8, wherein the heating means is controlled to heat the exhaust gas so as to stream the exhaust gas in a temperature ranging from 250 to 700 °C through the second catalyst.

11. A method for purifying an exhaust gas according to claim 7 or 8, wherein the heating means is controlled to heat the exhaust gas so as to stream the exhaust gas in a temperature ranging from 600 to 700 °C through the second catalyst.

## Patentansprüche

1. Vorrichtung zur Reinigung eines Abgases das Feststoffe enthält und in einem Abgassystem fließt, **dadurch gekennzeichnet, daß** die Vorrichtung aufweist:
einen ersten Katalysator (4);
einen zweiten Katalysator (5), der ein NOₓ sorbiererider-und-reduzierender Katalysator ist, und der an einer stromabwärtigen Seite des ersten Katalysators (4) angeordnet ist;
eine,Heizeinrichtung (40) zum Heizen des ersten Katalysators (4);
einen Injektor (12), der ein flüssiges Reduktionsmittel in das Abgas einspritzt, und der an einer stromaufwärtigen Seite des ersten Katalysators (4) angeordnet ist;
eine Differenzdruck-Erfassungseinrichtung (41, 50, 51) zum Erfassen einer Druckdifferenz zwischen Einlaß- und Auslaßseiten des ersten Katalysators (4) und/oder einer Druckdifferenz zwischen Einlaß- und Auslaßseiten des zweiten Katalysators (5); und
eine Steuereinrichtung (6), um zumindest die Heizeinrichtung (40) zu steuern.

2. Vorrichtung nach Anspruch 1, wobei der zweite Katalysator (5) ein Filter-Katalysator ist, mit:
einem wand-Fluß-strukturierten wabenförmigen Substrat mit
einer Einlaßzelle, die an einer stromabwärtigen Seite davon befestigt ist,
einer Auslaßzelle die benachbart zur Einlaßzelle angeordnet ist, und mit einer stromaufwärtigen Seite davon verbunden ist, und
einer Zellwand, welche die Einlaßzelle und die Auslaßzelle voneinander abgrenzt und eine darin befindliche Pore aufweist; und
einer auf einem Substrat der Zellwand und einer Innenfläche der Pore ausgebildeten katalytischen Schicht mit
einem Oxidträger,
einem katalytischen Bestandteil, der auf den Oxidträger geladen ist, und
einem NOₓ sorbierenden Material, das auf den Oxidträger geladen ist.

3. Vorrichtung nach Anspruch 1 oder 2, wobei der erste Katalysator (4) aufweist:
ein gerader-Fluß-strukturiertes wabenförmiges Substrat mit
einer Zelle, durch welche das Abgas von einer stromaufwärtigen Seite zu einer stromabwärtigen Seite fließt, und
eine Zellwand, welche die Zelle trennt; und
eine katalytische Schicht mit
einem Oxidträger, und
einem katalytischem Bestandteil, das auf den Oxidträger geladen ist.

4. Vorrichtung nach Anspruch 3, wobei die katalytische Schicht des ersten Katalysators (4) ferner ein NOₓ sorbierendes Material aufweist, das auf den Oxidträger geladen ist.

5. Vorrichtung nach einem der Ansprüche 1 bis 4, wobei der erste Katalysator (4) mit der Heizeinrichtung (40) vorgesehen ist.

6. Vorrichtung nach einem der Ansprüche 1 bis 5, wobei die Differenzdruck-Erfassungseinrichtung aufweist:
ein erstes Druckerfassungselement (41) zum Erfassen eines Druckes an einer stromaufwärtigen Seite des ersten Katalysators (4);
ein zweites Druckerfassungselement (50) zum Erfassen eines Drucks zwischen dem ersten Katalysator (4) und dem zweiten Katalysator (5); und
ein drittes Druckerfassungselement (51) zum Erfassen eines Drucks an einer stromabwärtigen Seite des zweiten Katalysators (5).

7. Verfahren zur Reinigung eines Abgases, **dadurch gekennzeichnet, daß** das Verfahren aufweist:
einen Prozeß zur Verwendung der Vorrichtung gemäß einem der Ansprüche 1 bis 6,
wobei der Prozeß aufweist
einen Schritt zum Steuern der Heizeinrichtung, um für den Fall, daß eine Druckdifferenz zwischen den Einlaß- und Auslaßseiten des ersten Katalysators, welche durch die Differenzdruck-Erfassungseinrichtung erfaßt wird, eine vorherbestimmten Wert überschreitet, zu handeln, und/oder
einen Schritt zum Steuern der Heizeinrichtung, um für den Fall, daß eine Druckdifferenz zwischen den Einlaß- und Auslaßseiten des zweiten Katalysators, welche durch die Differenzdruck-Erfassungseinrichtung erfaßt wird, eine vorherbestimmten Wert überschreitet, zu handeln.

8. Verfahren zur Reinigung eines Abgases nach Anspruch 7, wobei der Prozeß ferner aufweist:
einen Schritt zur Betätigung des Injektors, um für den Fall, daß eine Druckdifferenz zwischen den Einlaß- und Auslaßseiten des zweiten Katalysators, welche durch die Differenzdruck-Erfassungseinrichtung erfaßt wird, einen vorherbestimmten Wert überschreitet, zu handeln.

9. Verfahren zur Reinigung eines Abgases nach Anspruch 7 oder 8, wobei die Heizeinrichtung gesteuert wird, um das Abgas aufzuheizen, um das Abgas in einem Temperaturbereich zwischen 250 und 350°C durch den ersten Katalysator strömen zu lassen.

10. Verfahren zur Reinigung eines Abgases nach Anspruch 7 oder 8, wobei die Heizeinrichtung gesteuert wird, um das Abgas aufzuheizen, um das Abgas in einem Temperaturbereich zwischen 250 und 700°C durch den zweiten Katalysator strömen zu lassen.

11. Verfahren zur Reinigung eines Abgases nach Anspruch 7 oder 8, wobei die Heizeinrichtung gesteuert wird, um das Abgas aufzuheizen, um das Abgas in einem Temperaturbereich zwischen 600 und 700°C durch den zweiten Katalysator strömen zu lassen.

## Revendications

1. Appareil de' purification des gaz d'échappement comprenant des matières particulaires et circulant dans un système d'échappement, **caractérisé en ce qu'**il comprend :
un premier catalyseur (4) ;
un deuxième catalyseur (5) qui est un catalyseur de sorption et de réduction de NOx et qui est disposé en aval du premier catalyseur (4) ;
un moyen de chauffage (40) destiné à chauffer le premier catalyseur (4) ;
un injecteur (12) qui injecte un agent de réduction liquide dans les gaz d'échappement et qui est disposé en amont du premier catalyseur (4) ;
un moyen de détection de pression différentielle (41, 50, 51) destiné à détecter une différence dans la pression entre les côtés entrée et sortie du premier catalyseur (4), et/ou une différence dans la pression entre les côtés entrée et sortie du deuxième catalyseur (5) ; et
un moyen de commande (6) destiné à commander au moins le moyen de chauffage (40).

2. Appareil selon la revendication 1, dans lequel le deuxième catalyseur (5) est un filtre catalytique comprenant :
un substrat en nid d'abeilles à écoulement par paroi comprenant
une cellule d'entrée bouchée du côté aval de celui-ci,
une cellule de sortie avoisinant la cellule d'entrée et bouchée du côté amont de celui-ci, et
une paroi cellulaire démarquant la cellule d'entrée et la cellule de sortie et comportant un pore dans celle-ci ; et
une couche catalytique qui est formée sur une surface de la paroi cellulaire et une face interne du pore et qui comprend
un support d'oxyde,
un ingrédient catalytique chargé sur le support d'oxyde, et un matériau de sorption des NOx chargé sur le support d'oxyde.

3. Appareil selon la revendication 1 ou 2, dans lequel le premier catalyseur (4) comprend :
un substrat en nid d'abeille à écoulement rectiligne comprenant
une cellule à travers laquelle les gaz d'échappement circulent du côté amont au côté aval, et
une paroi cellulaire de démarcation des cellules ; et
une couche catalytique comprenant
un support d'oxyde, et
un ingrédient catalytique chargé sur le support d'oxyde.

4. Appareil selon la revendication 3, dans lequel la couche catalytique du premier catalyseur (4) comprend de plus un matériau de sorption des NOx chargé sur le support d'oxyde.

5. Appareil selon l'une quelconque des revendications 1 à 4, dans lequel le premier catalyseur (4) est muni du moyen de chauffage (40).

6. Appareil selon l'une quelconque des revendications 1 à 5, dans lequel le moyen de détection de pression différentielle comprend :
un premier élément de détection de pression (41) consistant à détecter une pression au niveau d'un côté amont du premier catalyseur (4) ;
un deuxième élément de détection de pression (50) consistant à détecter une pression entre le premier catalyseur (4) et le deuxième catalyseur (5) ; et
un troisième élément de détection de pression (51) consistant à détecter une pression au niveau d'un côté aval du deuxième catalyseur (5).

7. Procédé de purification des gaz d'échappement, **caractérisé en ce qu'**il comprend
un processus consistant à utiliser l'appareil conformément à l'une quelconque des revendications 1 à 6,
dans lequel aux processus comprend
une étape consistant à commander le moyen de chauffage pour agir dans un cas où une différence de pression entre les côtés entrée et sortie du premier catalyseur détectée par le moyen de détection de pression différentielle dépasse une valeur prédéterminée, et/ou
une étape consistant à commander le moyen de chauffage pour agir dans un cas où une différence dans de pression entre les côtés entrée et sortie du deuxième catalyseur détectée par le moyen de détection de pression différentielle dépasse une valeur prédéterminée.

8. Procédé de purification des gaz d'échappement selon la revendication 7, dans lequel le processus comprend de plus
une étape consistant à actionner l'injecteur pour agir dans un cas où une différence de pression entre les côtés entrée et sortie du deuxième catalyseur détectée par le moyen de détection de pression différentielle dépasse une valeur prédéterminée.

9. Procédé de purification des gaz d'échappement selon la revendication 7 ou 8, dans lequel le moyen de chauffage est commandé pour chauffer les gaz d'échappement de façon faire circuler les gaz d'échappement dans une plage de températures allant de 250 °C à 350 °C à travers le premier catalyseur.

10. Procédé de purification des gaz d'échappement selon la revendication 7 ou 8, dans lequel le moyen de chauffage est commandé pour chauffer les gaz d'échappement de façon à faire circuler les gaz d'échappement dans une plage de températures allant de 250 °C à 700 °C à travers le deuxième catalyseur.

11. Procédé de purification des gaz d'échappement selon la revendication 7 ou 8, dans lequel le moyen de chauffage est commandé pour chauffer les gaz d'échappement de façon à faire circuler les gaz d'échappement dans une plage de températures allant de 600 °C à 700 °C à travers le deuxième catalyseur.
